# FASCICULE DE BREVET EUROPEEN

(11) **EP 3 953 239 B1**
(45) Date de publication et mention de la délivrance du brevet: **01.05.2024**
(21) Numéro de dépôt: 20724180.3
(22) Date de dépôt: 06.04.2020
(51) Int. Cl.: B62D 27/06, B62D 25/14

(54) **DISPOSITIF DE RENFORT D'UNE TRAVERSE DE POSTE DE CONDUITE D'UN VÉHICULE AUTOMOBILE**
VORRICHTUNG ZUR BEFESTIGUNG EINES QUERTRÄGERS EINER FAHRERKABINE EINES KRAFTFAHRZEUGS
DEVICE FOR REINFORCING A CROSS-MEMBER OF A DRIVER'S COMPARTMENT OF A MOTOR VEHICLE

(30) Priorité: 11.04.2019 FR 1903888
(43) Date de publication de la demande: 16.02.2022
(73) Titulaire: Renault s.a.s, 92100 Boulogne Billancourt (FR); Prefecture de Police de Paris - Brigade de Sapeurs-Pompiers de Paris (BSPP), 75017 Paris (FR)
(72) Inventeur: CARDOSO, Gregory, 92230 Gennevillier (FR); FLANDIN, Michael, 28410 BROUE (FR); PETIT BOULANGER, Claire, 78280 Guyancourt (FR)
(74) Mandataire: Fédit-Loriot
(86) Numéro de dépôt international: PCT/FR2020/000092
(87) Numéro de publication internationale: WO 2020/208310

(56) Documents cités:
- EP-A2- 2 436 579
- US-A1- 2011 095 570
- US-A1- 2017 057 538
- US-B1- 6 250 678

## Description

La présente invention se rapporte à un dispositif de renfort d'une traverse de poste de conduite d'un véhicule automobile adaptée à s'étendre transversalement dans le véhicule sous une partie supérieure d'une planche de bord supportée par ladite traverse, ledit dispositif comprenant au moins une jambe de renfort adaptée à être fixée à ladite traverse, pour connecter ladite traverse à un élément structurel du véhicule disposé au niveau du plancher du véhicule, ladite jambe de renfort étant munie d'une extrémité inférieure pourvue d'au moins un orifice de fixation traversant d'axe parallèle à la direction transversale du véhicule permettant de réaliser une liaison boulonnée suivant ledit axe pour relier ladite jambe de renfort audit élément structurel.

Par « traverse de poste de conduite », on entend généralement un élément allongé selon un axe transversal au véhicule, qui permet de rigidifier la zone de poste de conduite et qui sert notamment de point d'accroche pour la planche de bord du véhicule. Il est connu d'associer à cette traverse une ou deux jambes de renfort en acier, positionnées sensiblement verticalement sous la planche de bord entre les sièges conducteur et passager avant. Ces jambes de renfort sont destinées à relier le corps principal de la traverse et le plancher du véhicule, pour reprendre une partie des efforts supportés par la traverse et les transmettre à la structure du véhicule via le plancher. A cet effet, chaque jambe de renfort est prévue pour être fixée à un élément structurel de la caisse du véhicule au niveau du plancher du véhicule par au moins une vis traversant un orifice de fixation correspondant d'une extrémité inférieure de la jambe de renfort pour assurer une liaison boulonnée au travers de l'extrémité inférieure de la jambe de renfort avec l'élément structurel de la caisse du véhicule. Ces jambes de renfort contribuent ainsi à améliorer le confort acoustique et vibratoire du véhicule, ainsi qu'à la sécurité passive du véhicule.

En cas d'accident violent avec des énergies de choc élevées, il en résulte souvent un coincement du ou des passagers avant entre la planche de bord et le siège. Aussi, pour extraire un passager piégé, il est nécessaire pour les équipes de secours d'élargir l'espace entre la planche de bord et le siège, ce qui implique notamment de pouvoir effectuer un relevage de la planche de bord. Or, cette technique de désincarcération est difficilement compatible avec la présence des jambes de renfort décrites ci-dessus destinées à améliorer le confort vibratoire et acoustique du véhicule. Autrement dit, ces jambes de renfort empêchent ou à tout le moins retardent les équipes de secours dans leur capacité à effectuer la manoeuvre de relevage de planche de bord pour extraire les passagers avant.

Le document US 6 250 678 B1 décrit un dispositif de renfort d'une traverse de poste de conduite d'un véhicule automobile adaptée à s'étendre transversalement dans le véhicule sous une partie supérieure d'une planche de bord supportée par ladite traverse, ledit dispositif comprenant au moins une jambe de renfort adaptée à être fixée à ladite traverse pour connecter ladite traverse à un élément structurel du véhicule disposé au niveau du plancher du véhicule. La jambe de renfort est munie d'une extrémité inférieure pourvue d'un orifice de fixation traversant d'axe parallèle à la direction transversale du véhicule. L'orifice de fixation présente un contour partiellement fermé sur lui-même, qui s'ouvre en direction d'un bord libre inférieur de ladite extrémité inférieure de ladite jambe de renfort, sur une encoche débouchant dans ledit bord libre inférieur.

Aussi, un problème qui se pose et que vise à résoudre la présente invention, est de proposer un dispositif de renfort du type précité qui allie le maintien des prestations de confort vibratoire et acoustique du véhicule et la possible réalisation de la manoeuvre de désincarcération de relevage de la planche de bord suite à un violent accident.

A cette fin, le dispositif de renfort de l'invention est essentiellement caractérisé en ce que, dans l'orifice de fixation est reçue une tige filetée permettant de réaliser une liaison boulonnée suivant ledit axe pour relier ladite jambe de renfort audit élément structurel, ladite encoche a une dimension en largeur adaptée à permettre le passage le long de ladite encoche de ladite tige filetée.

Selon d'autres caractéristiques préférentielles du dispositif de renfort :
- ladite encoche s'étend perpendiculairement à l'axe dudit orifice de fixation entre ledit orifice de fixation et ledit bord libre inférieur ;
- ledit contour dudit orifice de fixation est de forme semi-circulaire ;
- ladite jambe de renfort est destinée à être rapportée sensiblement verticalement sous ladite planche de bord entre les sièges conducteur et passager ;
- le dispositif comprend deux jambes de renfort fixées à ladite traverse.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une représentation schématique en perspective d'un agencement connu d'un dispositif de renfort d'une traverse de poste de conduite avec une vue de détail de l'extrémité inférieure du dispositif pour la fixation basse sur la caisse du véhicule selon cet agencement connu ;
[Fig. 2a] est une représentation schématique de l'extrémité inférieure du dispositif de renfort de la figure 1 ;
[Fig. 2b] est une représentation schématique de l'extrémité inférieure du dispositif de renfort conforme à l'invention.

Dans la suite de la description, les termes « supérieur», « inférieur », « longitudinal », « transversal », « vertical », « avant », « arrière », « haut », « bas », etc. sont définis par référence au système d'axe orthogonal usuel des véhicules automobiles représenté sur les figures, possédant un axe longitudinal X dirigé de l'avant vers arrière du véhicule, un axe transversal Y dirigé vers la droite, et un axe vertical Z dirigé vers le haut.

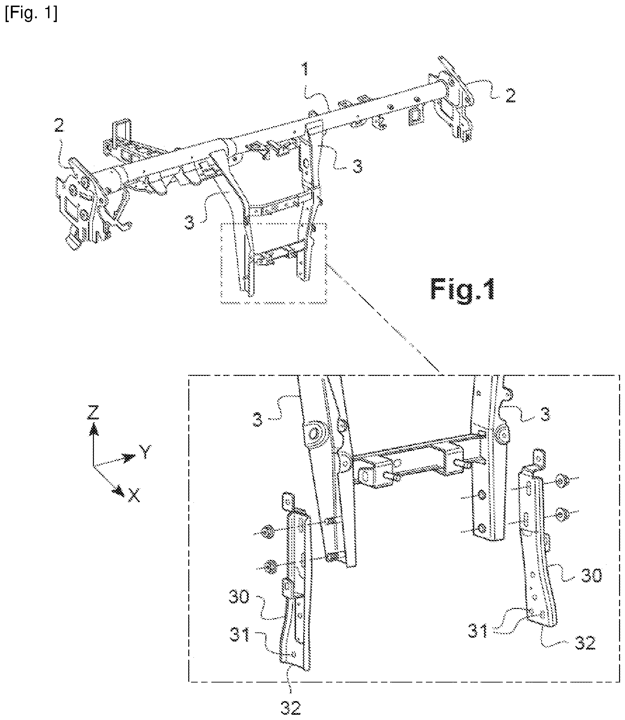

En référence à la Figure 1, on décrit une traverse de poste de conduite 1 destiné à s'étendre sensiblement en vis-à-vis du siège conducteur et du siège passager avant d'un véhicule automobile et dont les extrémités respectives 2 sont destinée à être fixées aux montants latéraux avant gauche et avant droit du véhicule automobile (non représentés). Cette traverse 1 est notamment adaptée pour supporter la planche de bord du véhicule.

La traverse 1 comprend en outre deux jambes de renforts 3, de préférence obtenues en acier, fixées à la traverse 1 sensiblement au centre de celle-ci et s'étendant parallèlement l'une à l'autre selon une direction sensiblement perpendiculaire à celle de la traverse 1. Les jambes de renfort 3 sont destinées à être fixées à la caisse du véhicule automobile à une de leur partie d'extrémité 30, dite extrémité inférieure, s'étendant sous la traverse 10. De la sorte, lorsque la planche de bord est montée sur la traverse, les deux jambes de renfort 3 sont positionnées de façon à s'étendre sensiblement selon la direction verticale Z du véhicule sous la planche de bord du véhicule, entre les sièges conducteur et passager avant.

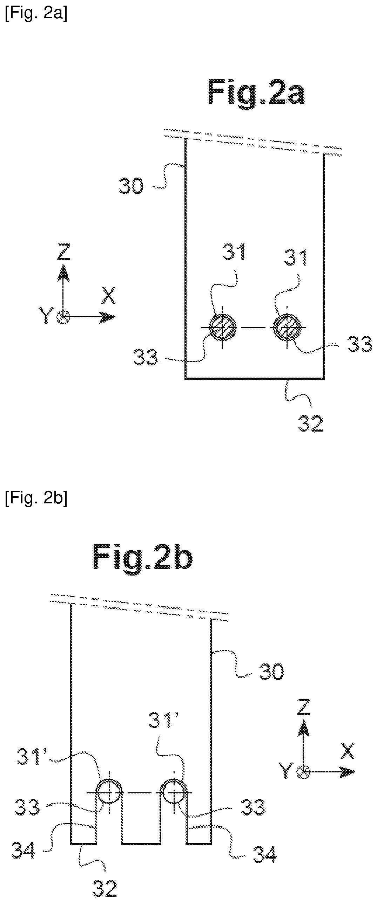

Les extrémités inférieures 30 des jambes de renfort 3 constituent des platines de fixation disposées dans le prolongement des jambes de renfort 3, à l'opposé de la traverse 1 par rapport aux jambes de renfort 3, et sont destinées à être fixées à un élément structurel (non représenté) de la caisse du véhicule, au niveau du plancher, au moyen d'une ou plusieurs liaisons boulonnées s'étendant sensiblement transversalement selon la direction transversale Y. Dans l'exemple représenté, pour assurer la fixation des jambes de renfort 3 à l'élément structurel de la caisse du véhicule, chaque extrémité inférieure 30 est pourvue de deux orifices de fixation 31 traversant, d'axe parallèle à la direction transversale du véhicule, agencés en partie basse de l'extrémité inférieure 30, sensiblement à proximité d'un bord libre inférieur 32 de l'extrémité inférieure 30. Comme on le voit mieux sur la vue de détail de la figure 2a, illustrant l'extrémité inférieure 30 d'une jambe de renfort de la traverse, ces orifices de fixation 31 présentent habituellement une forme circulaire et sont adaptés à recevoir une tige filetée 33 destinée à constituer une partie de l'assemblage boulonné permettant de solidariser l'extrémité inférieure 30 de la jambe de renfort 3 avec ledit élément structure de la caisse du véhicule.

En référence à la figure 2b, on a représenté l'extrémité inférieure 30 d'une jambe de renfort de la traverse conforme à l'invention, dans laquelle on prévoit que chaque orifice de fixation traversant 31' présente un contour partiellement fermé sur lui-même, définissant préférentiellement une forme semi-circulaire, qui s'ouvre en direction du bord libre inférieur 32 de l'extrémité inférieure 30 de la jambe de renfort 3, sur une encoche 34 débouchant dans le bord libre inférieur 32 de l'extrémité inférieure 30 de la jambe de renfort 3. Autrement dit, chaque orifice de fixation traversant 31' est un orifice semi-circulaire ouvert dans le bord libre inférieur 32 de l'extrémité inférieure 30 par l'intermédiaire de l'encoche 34. L'encoche 34 est une encoche rectiligne s'étendant sensiblement perpendiculairement à l'axe de l'orifice de fixation 31' entre ce dernier et le bord libre inférieur 32 de l'extrémité inférieure 30.

Ainsi, conformément à l'invention, la partie basse des orifices de fixation traversant 31', soit leur partie située en vis-à-vis du bord libre inférieur 32 de l'extrémité inférieure 30, est ouverte et prolongée par l'encoche 34 qui débouche dans le bord libre inférieur 32 de l'extrémité inférieure 30 de la jambe de renfort 3. En outre, l'encoche 34 a une dimension en largeur adaptée à permettre le passage le long de celle-ci de la tige filetée 33 destinée à être reçue dans l'orifice de fixation traversant 31' pour réaliser l'assemblage boulonné avec l'élément structurel de la caisse du véhicule. De la sorte, lors d'une intervention de désincarcération mettant en oeuvre un relevage de la planche de bord, la tige 33 de l'assemblage boulonné reçue dans l'orifice de fixation 31' peut avantageusement coulisser le long de l'encoche 34 jusqu'au bord libre inférieur 32 d'où elle peut s'extraire, permettant ainsi de libérer l'extrémité inférieure 30 de la jambe de force 3 de la caisse du véhicule.

## Revendications

1. [Dispositif de renfort d'une traverse (1) de poste de conduite d'un véhicule automobile adaptée à s'étendre transversalement dans le véhicule sous une partie supérieure d'une planche de bord supportée par ladite traverse, ledit dispositif comprenant au moins une jambe de renfort (3) adaptée à être fixée à ladite traverse (1) pour connecter ladite traverse à un élément structurel du véhicule disposé au niveau du plancher du véhicule, ladite jambe de renfort (3) étant munie d'une extrémité inférieure (30) pourvue d'au moins un orifice de fixation traversant (31') d'axe parallèle à la direction transversale du véhicule, dans lequel est reçue une tige filetée (33) permettant de réaliser une liaison boulonnée suivant ledit axe pour relier ladite jambe de renfort (3) audit élément structurel, ledit orifice de fixation traversant (31') présente un contour partiellement fermé sur lui-même, qui s'ouvre en direction d'un bord libre inférieur (32) de ladite extrémité inférieure de ladite jambe de renfort, sur une encoche (34) débouchant dans ledit bord libre inférieur (32), ladite encoche (34) a une dimension en largeur adaptée à permettre le passage le long de ladite encoche de ladite tige filetée (33).

2. Dispositif selon la revendication 1, **caractérisé en ce que** ladite encoche (34) s'étend perpendiculairement à l'axe dudit orifice de fixation (31') entre ledit orifice de fixation (31') et ledit bord libre inférieur (32).

3. Dispositif selon la revendication 1 ou 2, **caractérisé en ce que** ledit contour dudit orifice de fixation (31') est de forme semi-circulaire.

4. Dispositif selon l'une quelconque des revendications précédentes, **caractérisé en ce que** ladite jambe de renfort (3) est destinée à être rapportée sensiblement verticalement sous ladite planche de bord entre les sièges conducteur et passager.

5. Dispositif selon l'une quelconque des revendications précédentes, **caractérisé en ce que** qu'il comprend deux jambes de renfort (3) fixées à ladite traverse.

6. Véhicule automobile comprenant une traverse (1) de poste de conduite d'un véhicule automobile s'étendant transversalement dans le véhicule sous une partie supérieure d'une planche de bord supportée par ladite traverse, **caractérisé en ce qu'**il comprend un dispositif de renfort selon l'une quelconque des revendications 1 à 5.

## Patentansprüche

1. Verstärkungsvorrichtung für einen Querträger (1) der Fahrerkabine eines Kraftfahrzeugs, der dazu ausgebildet ist, sich quer im Fahrzeug unter einem oberen Teil eines von dem Querträger getragenen Armaturenbretts zu erstrecken, wobei die Vorrichtung mindestens einen Verstärkungsschenkel (3) umfasst, der dazu ausgebildet ist, am Querträger (1) befestigt zu werden, um den Querträger mit einem Strukturelement des Fahrzeugs zu verbinden, das auf der Höhe des Bodens des Fahrzeugs angeordnet ist, wobei der Verstärkungsschenkel (3) mit einem unteren Ende (30) ausgestattet ist, das mit mindestens einer durchgehenden Befestigungsöffnung (31') mit einer zur Querrichtung des Fahrzeugs parallelen Achse versehen ist, in der eine Gewindestange (33) aufgenommen wird, die es ermöglicht, eine Schraubverbindung entlang der Achse herzustellen, um den Verstärkungsschenkel (3) mit dem Strukturelement zu verbinden, wobei die durchgehende Befestigungsöffnung (31') eine teilweise in sich geschlossene Kontur aufweist, die sich von einer unteren freien Kante (32) des unteren Endes des Verstärkungsschenkels in Richtung einer Kerbe (34) öffnet, die in die untere freie Kante (32) mündet, wobei die Kerbe (34) eine Breitenabmessung hat, die dazu ausgebildet ist, den Durchgang der Gewindestange (33) entlang der Kerbe zu ermöglichen.

2. Vorrichtung nach Anspruch 1, **dadurch gekennzeichnet, dass** sich die Kerbe (34) senkrecht zur Achse der Befestigungsöffnung (31') zwischen der Befestigungsöffnung (31') und dem unteren freien Rand (32) erstreckt.

3. Vorrichtung nach Anspruch 1 oder 2, **dadurch gekennzeichnet, dass** die Kontur der Befestigungsöffnung (31') halbkreisförmig ist.

4. Vorrichtung nach einem der vorhergehenden Ansprüche, **dadurch gekennzeichnet, dass** der Verstärkungsschenkel (3) dazu bestimmt ist, im Wesentlichen vertikal unter dem Armaturenbrett zwischen dem Fahrer- und dem Beifahrersitz befestigt zu werden.

5. Vorrichtung nach einem der vorhergehenden Ansprüche, **dadurch gekennzeichnet, dass** sie zwei an der Querstrebe befestigte Verstärkungsschenkel (3) umfasst.

6. Kraftfahrzeug, das einen Querträger (1) der Fahrerkabine eines Kraftfahrzeugs umfasst, der sich quer im Fahrzeug unter einem oberen Teil eines von dem Querträger getragenen Armaturenbretts erstreckt, **dadurch gekennzeichnet, dass** er eine Verstärkungsvorrichtung nach einem der Ansprüche 1 bis 5 umfasst.

## Claims

1. A device for reinforcing a cross-member (1) of a driver compartment of a motor vehicle adapted to extend transversely in the vehicle under an upper portion of a dashboard supported by said cross-member, said device comprising at least one reinforcing leg (3) adapted to be fastened to said cross-member (1) to connect said cross-member to a structural element of the vehicle arranged at the floor of the vehicle, said reinforcing leg (3) being provided with a lower end (30) provided with at least one fastening through-orifice (31') with an axis parallel to the transverse direction of the vehicle, in which a threaded rod (33) is received allowing making a bolted connection along said axis to connect said reinforcing leg (3) to said structural element, said fastening through-orifice (31') has a contour partially closed on itself, which opens in the direction of a lower free edge (32) of said lower end of said reinforcing leg, on a notch (34) opening into said lower free edge (32), said notch (34) has a widthwise dimension adapted to enable the passage of said threaded rod (33) along said notch.

2. The device according to claim 1, **characterised in that** said notch (34) extends perpendicularly to the axis of said fastening orifice (31') between said fastening orifice (31') and said lower free edge (32).

3. The device according to claim 1 or 2, **characterised in that** said contour of said fastening orifice (31') has a semi-circular shape.

4. The device according to any one of the preceding claims, **characterised in that** said reinforcing leg (3) is intended to be attached substantially vertically under said dashboard between the driver and passenger seats.

5. The device according to any one of the preceding claims, **characterised in that** it comprises two reinforcing legs (3) fastened to said cross-member.

6. A motor vehicle comprising a cross-member (1) of a driver compartment of a motor vehicle extending transversely in the vehicle under an upper portion of a dashboard supported by said cross-member, **characterised in that** it comprises a reinforcing device according to any one of claims 1 to 5.
